# EUROPEAN PATENT APPLICATION

(11) **EP 4 310 765 A1**
(43) Date of publication of application: **24.01.2024**
(21) Application number: 23184162.8
(22) Date of filing: 07.07.2023
(51) Int. Cl.: G06Q 50/06, H01M 8/04298, H01M 8/04992, G06Q 10/04, G06Q 10/06

(54) **PLANNING DEVICE**

(30) Priority: 21.07.2022 JP 2022116548
(71) Applicant: KABUSHIKI KAISHA TOSHIBA, Minato-ku Tokyo 105-0023 (JP); Toshiba Energy Systems & Solutions Corporation, Saiwai-ku Kawasaki-shi Kanagawa (JP)
(72) Inventor: NAKAJIMA, Keita, Kawasaki-shi, Kanagawa (JP); AKIBA, Takashi, Kawasaki-shi, Kanagawa (JP); YAMANE, Fumiyuki, Kawasaki-shi, Kanagawa (JP)
(74) Representative: Hoffmann Eitle

(57) **Abstract**

A planning device includes: a specifying unit that specifies a demand type categorizing a hydrogen demand and an intended use of the hydrogen demand; an importance degree setting unit that sets an importance degree table configured to link importance degrees of the demand type and the intended use with results of the specification; an importance degree determining unit that determines the importance degree of the demand type and the importance degree of the intended use based on the hydrogen demand information, the results of the specification, and the importance degree table; a demand predicting unit that predicts the hydrogen demand based on the hydrogen demand information and the results of the specification; and a supply plan creating unit that creates a hydrogen supply plan based on the state information, the hydrogen demand information, a result of the prediction, the importance degrees, and an electric power information.

## Description

### FIELD

Embodiments of the present invention relate to a planning device that creates a supply plan for a substance such as hydrogen, for instance.

### BACKGROUND

The recent worldwide orientation toward the achievement of what is called carbon neutrality has given rise to the need for the increased introduction of renewable energy-based power sources from the viewpoint of energy supply. Meanwhile, from the viewpoint of energy demand, the promotion of energy transformation of energy resources by hydrogenation is considered important, and it is expected that various types of hydrogen demands (intended use) will spread in the future.

A possible low-cost hydrogen supply method may be to produce hydrogen using relatively inexpensive surplus electric power. However, since the surplus electric power is not always available, its supply that meets all the hydrogen demands is difficult.

### BRIEF DESCRIPTION OF THE DRAWINGS

FIG. 1 is a diagram illustrating the whole configuration of a hydrogen supply system including a hydrogen supply planning device of a first embodiment.
FIG. 2 is a block diagram illustrating the configuration of the hydrogen supply planning device of the first embodiment.
FIG. 3 is a flowchart illustrating the operation of the hydrogen supply planning device of the first embodiment.
FIG. 4 is a chart illustrating an example of an importance degree determination table in the hydrogen supply planning device of the first embodiment.
FIG. 5 is a diagram illustrating the whole configuration of a hydrogen supply system including a hydrogen supply planning device of a second embodiment.
FIG. 6 is a block diagram illustrating the configuration of the hydrogen supply planning device of the second embodiment.
FIG. 7 is a block diagram illustrating the configuration of a hydrogen supply planning device of a third embodiment.
FIG. 8 is a block diagram illustrating the configuration of a hydrogen supply planning device of a fourth embodiment.
FIG. 9 is a diagram illustrating the whole configuration of a hydrogen supply system including a hydrogen supply planning device of a fifth embodiment.
FIG. 10 is a block diagram illustrating the configuration of the hydrogen supply planning device of the fifth embodiment.
FIG. 11 is a chart illustrating an example of an importance degree determination table in the hydrogen supply planning device of the fifth embodiment.
FIG. 12 is a block diagram illustrating the configuration of a hydrogen supply planning device of a sixth embodiment.
FIG. 13 is a block diagram illustrating the configuration of a hydrogen supply planning device of a seventh embodiment.
FIG. 14 is a diagram illustrating the whole configuration of a hydrogen supply system including a hydrogen supply planning device of an eighth embodiment.
FIG. 15 is a diagram illustrating the whole configuration of a hydrogen supply system including a hydrogen supply planning device of a ninth embodiment.

### DETAILED DESCRIPTION

As described above, a problem with the conventional hydrogen supply is the difficulty in supplying hydrogen at a low cost and stably. Embodiments were made to solve such a problem and have an object to provide a planning device that enables the supply of hydrogen according to demands.

A planning device of an embodiment is a planning device that is connected to an electric power supply source for supplying electric power and a hydrogen storing and supplying device for storing hydrogen and supplying the hydrogen to a hydrogen consumer, and that creates a hydrogen supply plan in the hydrogen storing and supplying device. The planning device includes: a state information receiving unit that receives state information including a state of the hydrogen storing and supplying device and a storage state of the hydrogen in the hydrogen storing and supplying device; a demand information receiving unit that obtains hydrogen demand information including a type and an intended use of a hydrogen demand from the hydrogen consumer; a specifying unit that specifies, regarding the hydrogen demand information, a demand type categorizing the hydrogen demand and the intended use of the hydrogen demand; an importance degree setting unit that sets an importance degree table configured to link an importance degree of the demand type and an importance degree of the intended use with results of the specification by the specifying unit; an importance degree determining unit that determines the importance degree of the demand type and the importance degree of the intended use corresponding to the hydrogen demand information, based on the hydrogen demand information, the results of the specification by the specifying unit, and the importance degree table; a demand predicting unit that predicts the hydrogen demand based on the hydrogen demand information and the results of the specification by the specifying unit; an electric power information receiving unit that obtains, from the electric power supply source, electric power information including cost information of the electric power; and a supply plan creating unit that creates the hydrogen supply plan based on the state information, the hydrogen demand information, a result of the prediction, the importance degrees, and the electric power information.

In the embodiments, in consideration of the spread of various types of hydrogen demands (intended uses), a hydrogen supply planning device is proposed that sets an importance degree for each hydrogen demand (intended use) and plans the supply amount of hydrogen or when to supply the hydrogen, according to the importance degree. This makes it possible to meet hydrogen demands to the fullest extent possible by effectively and efficiently using low-cost surplus electric power.

### (First Embodiment)

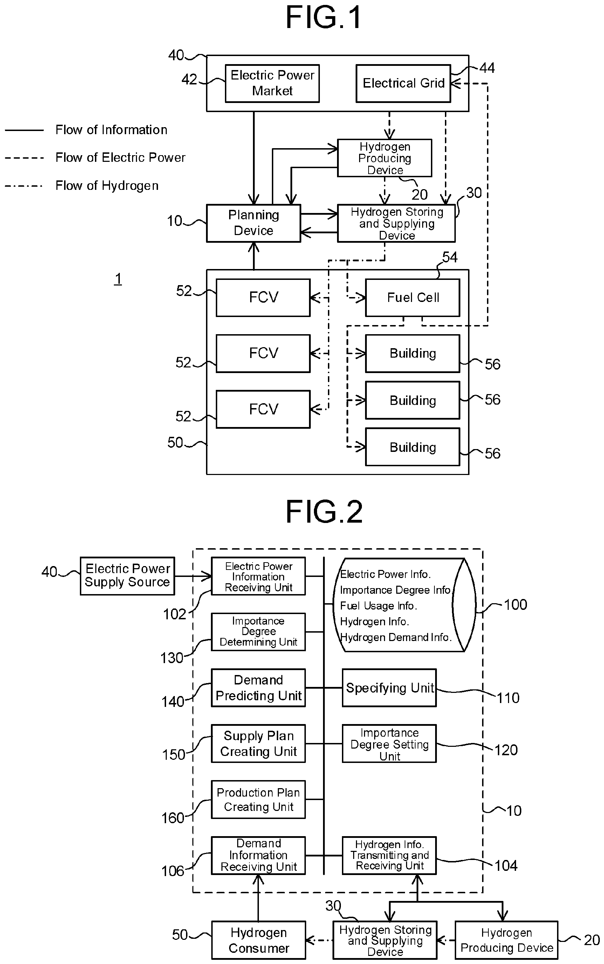

As illustrated in FIG. 1, a hydrogen supply planning device (planning device) 10 of a first embodiment is a constituent element of a hydrogen supply system 1 and is mutually connected to an electric power supply source 40, a hydrogen producing device 20, a hydrogen storing and supplying device 30, and a hydrogen consumer 50. Electric power is required to produce and store hydrogen, while hydrogen is also a resource to produce electric power. The hydrogen supply system 1 achieves hydrogen supply that meets hydrogen demands to the fullest extent possible by coordinating the electric power supply source 40 that supplies electric power to be used for the production and storage of hydrogen and the hydrogen consumer 50 that is capable of generating electric power by consuming hydrogen.

The electric power supply source 40 has elements, an electric power market 42 and an electrical grid 44. Specifically, these elements are: the electric power market 42 having therein information such as electric power supply capacity and electric power trading cost; and the electrical grid 44 that concretely generates electric power to supply the electric power to consumers. Here, the electric power market is a market where various values (electric energy, electric power, balancing capacity, non-fossil value, and so on) of electricity are traded, and the electrical grid is an electric power supply system managed by a general power transmission and distribution business operator.

The electric power supply source 40 supplies electric power through the electrical grid 44. The electric power supply source 40 is capable of providing information including the cost required for the supplied electric power and so on (electric power information), through the electric power market 42. That is, the planning device 10 of the first embodiment is capable of obtaining the electric power information including the electric power supply cost and so on from the electric power supply source 40.

The hydrogen producing device 20 is an element that produces hydrogen using electric power. The hydrogen producing device 20 is supplied with electric power from the electric power supply source 40 to produce hydrogen. The hydrogen producing device 20 provides the planning device 10 with information such as supplied electric energy, the charge for supplied electric power, the amount of generated hydrogen, the amount of hydrogen produced at each input of electric power, and so on. The hydrogen producing device 20 produces hydrogen based on a hydrogen production plan created by the planning device 10.

The hydrogen storing and supplying device 30 is an element that stores and supplies hydrogen using electric power from the electric power supply source 40. The hydrogen storing and supplying device 30 stores hydrogen produced by the hydrogen producing device 20 and supplies it to the hydrogen consumer 50. The hydrogen storing and supplying device 30 performs the hydrogen storage and the hydrogen supply to the hydrogen consumer 50 based on a hydrogen storage and supply plan created by the planning device 10.

The hydrogen consumer 50 is an element that is supplied with hydrogen to consume it. For example, the hydrogen consumer 50 includes elements such as fuel cell vehicles (FCV) 52, a fuel cell 54, and buildings 56. In the FCV 52, a fuel cell mounted thereon generates electric power by consuming hydrogen to drive the vehicle. The fuel cell 54, which is a device that produces electricity from hydrogen, is capable of generating electric power by consuming hydrogen and is capable of supplying the electric power to the buildings 56. The electric power generated by the fuel cell 54 may be supplied (sold) to the electric power supply source 40. The buildings 56 are elements that are end consumers of the electric power.

Here, demands of the hydrogen consumer 50 means all of vehicles (cars, buses, forklifts, trucks, airplanes, railway vehicles, ambulances, fire engines, and so on), buildings (private houses, apartment houses, company buildings, ballparks, roadside stations, and so on), and so on that require hydrogen as an energy source. The hydrogen consumer 50 can be categorized into a demand type and an intended use according to the type and intended use of a demand thereof. The intended use of hydrogen means the use purpose of the demand or how it is used.

The planning device 10 is a device that creates a hydrogen supply plan (hydrogen storage and supply plan) for the demand of the hydrogen consumer 50 and an operation plan (hydrogen production plan) for the hydrogen producing device that produces hydrogen to be supplied to the hydrogen consumer 50. In the hydrogen supply system 1 to which the planning device 10 of the embodiment is applied, the electric power supply source 40 supplies electric power to the hydrogen producing device 20, the hydrogen producing device 20 produces hydrogen using the received electric power, and the hydrogen storing and supplying device 30 stores the produced hydrogen and supplies the hydrogen to the hydrogen consumer 50. The planning device10 creates the hydrogen supply plan and the hydrogen production plan using information regarding the electric power market 42 and the electrical grid 44 which information is obtained from the electric power supply source 40, information regarding the hydrogen producing device 20, information regarding the hydrogen storing and supplying device 30, and information regarding the hydrogen consumer 50. That is, the planning device 10 enables the optimum hydrogen production and supply based on the demand of the hydrogen consumer 50, the electric power cost of the electric power supply source 40, and so on.

The configuration of the planning device 10 of the first embodiment will be described with reference to FIG. 2. The planning device 10 can be implemented by a computer composed of a CPU, a memory, and so on. As illustrated in FIG. 2, the planning device 10 of the first embodiment includes a database 100, an electric power information receiving unit 102, a hydrogen information transmitting and receiving unit 104, a demand information receiving unit 106, a specifying unit 110, an importance degree setting unit 120, an importance degree determining unit 130, a demand predicting unit 140, a supply plan creating unit 150, and a production plan creating unit 160.

In the database 100, demand information is accumulated. The demand information is, for example, information regarding the hydrogen consumer 50 in the hydrogen supply system 1. Examples of the demand information include operation information and traveling information of the FCVs 52 which are demands, model number information of the FCVs 52 and the fuel cell 54, and information on the frequency of fuel use in the FCVs 52 and the fuel cell 54.

In the database 100, information regarding the electric power cost obtained from the electric power supply source 40 and information such as the state of the hydrogen producing device 20, the state of the hydrogen storing and supplying device 30, and importance degrees of the demands are accumulated. These pieces of information are basic information that the planning device 10 uses when planning a hydrogen production amount and a hydrogen supply amount. In the database 100, the plans created by the planning device 10 may be accumulated. Examples of the basic information accumulated in the database 100 include electric power information, importance degree information, fuel usage information, hydrogen information, and hydrogen demand information. The electric power information may include electric power demand information such as balancing capacity in a demand-supply balancing market and trading information in a spot market.

The electric power information receiving unit 102 is an interface that receives the electric power information and so on provided by the electric power supply source 40. From the electric power supply source 40, the electric power information receiving unit 102 may receive the information online through a network or the like or may receive the information through a man-machine interface. The electric power information receiving unit 102 stores the received electric power information and so on in the database 100.

The hydrogen information transmitting and receiving unit 104 is an interface that receives the information indicating the states of the hydrogen producing device 20 and the hydrogen storing and supplying device 30 and also transmits the hydrogen production plan and the hydrogen supply plan to the hydrogen producing device 20 and the hydrogen storing and supplying device 30. The hydrogen information transmitting and receiving unit 104 may be connected to the hydrogen producing device 20 and the hydrogen storing and supplying device 30 through a network to transmit/receive the information online or may transmit or receive the information through a man-machine interface. The hydrogen information transmitting and receiving unit 104 stores the received information in the database 100.

The demand information receiving unit 106 is an interface that receives the hydrogen information, the hydrogen demand information, and so on provided by the hydrogen consumer 50. From the hydrogen consumer 50, the demand information receiving unit 106 may receive the information online through a network or the like or may receive the information through a man-machine interface. The demand information receiving unit 106 stores the received hydrogen information, hydrogen demand information, and so on in the database 100.

The demand type/intended use specifying unit (specifying unit) 110 is an arithmetic block that specifies a demand type and an intended use based on the hydrogen demand information obtained from the hydrogen consumer 50 and the hydrogen demand information accumulated in the database 100. The specifying process by the specifying unit 110 is achieved by AI analysis or the like. The hydrogen demand type is a type of a hydrogen consumer, and examples thereof include "Passenger Car", "Bus", and so on. The intended use is an intended use of hydrogen by an individual hydrogen demand, and examples of its definition include those corresponding to the respective demand types, such as "Private", "Regular Route", and "Sightseeing".

The demand type/intended use importance degree setting unit (importance degree setting unit) 120 is an arithmetic block that sets importance degrees for each demand type and each intended use. The importance degrees can be set by a manual method, an automatic method, a manual and automatic method, or a learning method. "Manual" means that a user determines the importance degrees of the demand type and the intended use to set importance degree information stored in the database 100. "Automatic" means that the specifying unit 110 sets the importance degrees of the demand type and the intended use based on the demand information obtained from the hydrogen consumer 50, without any human determination involved. As this "automatic" process, a method such as AI analysis is usable. "Learning" means that the importance degrees are set based on peculiar information obtained from the hydrogen consumer 50, such as requests or complaints from hydrogen users. Examples of the peculiar information in "learning" includes information for which a rule is difficult to define or which is difficult to generalize. The information on the demand type and intended use importance degrees set by the importance degree setting unit 120 is accumulated in the database 100 as an importance degree determination table. Such importance degree setting is usable when a new demand type or intended use not contained in the importance degree information accumulated in the database 100 is set.

The demand type/intended use importance degree determining unit (importance degree determining unit) 130 is an arithmetic block that determines importance degrees based on the importance degrees that the importance degree setting unit 120 sets for the demand type and the intended use which are specified by the specifying unit 110. The importance degree determining unit 130 determines the importance degrees based on, for example, the importance degree determination table.

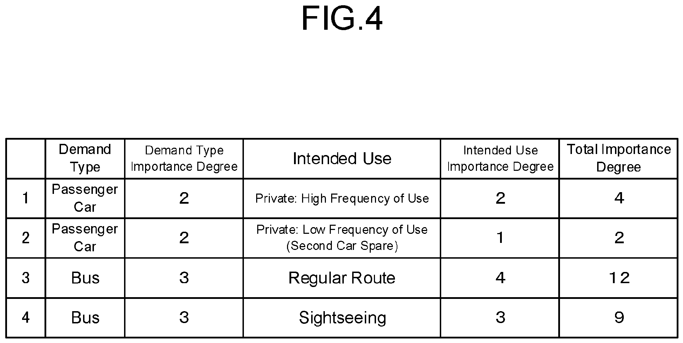

FIG. 4 illustrates an example of the importance degree determination table. In the example illustrated in FIG. 4, in the importance degree determination table, demand type, demand type importance degree, intended use, intended use importance degree, and total importance degree are entered in a corresponding manner.

The demand type importance degree is an importance degree set for each demand type. In the example illustrated in FIG. 4, the demand type importance degree of the demand type "Passenger Car" is "2", and the demand type importance degree of the demand type "Bus" is "3". The demand type importance degree is expressed by a numeric value based on importance as a public good and importance in light of energy consumption. Specifically, when "Passenger Car" and "Bus" are compared, a higher importance degree (a larger numeric value) is set for "Bus" in view of the importance as a public good and energy consumption per person.

The intended use importance degree is an importance degree set for each intended use. In the example illustrated in FIG. 4, the intended use importance degree of the intended use "Private: High Frequency of Use" is "2", the intended use importance of the intended use "Private: Low Frequency of Use (Second Car Spare)" is "1", the intended use importance of the intended use "Regular Route" is "4", and the intended use importance of the intended use "Sightseeing" is "3". These numeric values are set in view of public use and efficiency. Specifically, out of "Regular Route" and "Private", a higher intended use importance degree (larger numeric value) is set for "Regular Route".

As the total importance degree, a numeric value equal to the demand type importance degree multiplied by the intended use importance degree is set. That is, a numeric value in which the demand type importance degree and the intended use importance degree are both taken into consideration is set as the total importance degree. The total importance degree can be obtained based on the demand type importance degree and the intended use importance degree. For example, the total importance degree can be found as the product of the demand type importance degree and the intended use importance degree or the weighted sum of these. At this time, a coefficient based on an empirical value or the like may be taken into consideration.

In this embodiment, two or more different types of parameters are defined, and the total importance degrees are calculated using these to serve as a basis of the plans created by the planning device 10. This enables the plan creation in which not only the demand-supply relation of an electric power source or hydrogen but also other factors such as cost are taken into consideration.

The demand predicting unit 140 is an arithmetic block that predicts a hydrogen demand amount based on the demand type and the intended use which are specified by the specifying unit 110, the information on the frequency of fuel use (fuel usage information), and so on. The demand predicting unit 140 predicts the hydrogen demand amount based on, for example, information on the past demand type, intended use, frequency of fuel use, and so on accumulated in the database 100. The demand predicting unit 140 stores the created hydrogen demand amount and demand prediction result in the database 100.

The hydrogen supply plan creating unit (supply plan creating unit) 150 is an arithmetic block that creates the hydrogen supply plan for hydrogen to be supplied by the hydrogen storing and supplying device 30, based on information such as measurement value data of a hydrogen remaining amount in the hydrogen storing and supplying device 30 which data is obtained from the hydrogen storing and supplying device 30, the demand type importance degree and the intended use importance degree which are determined by the importance degree determining unit 130, the demand prediction result by the demand predicting unit 140, and the electric power cost in the electrical grid 44 and the electric power market 42 which cost is obtained from the electric power supply source 40. The supply plan creating unit 150 stores information about the created hydrogen supply plan in the database 100.

The hydrogen production plan creating unit (production plan creating unit) 160 is an arithmetic block that creates the operation plan and the hydrogen production plan that are to be executed by the hydrogen producing device 20, based on the information of the hydrogen supply plan created by the supply plan creating unit 150, the operation information of the hydrogen producing device 20 which information is obtained from the hydrogen producing device 20, the information such as the cost of electric power in the electrical grid 44 which information is obtained from the electric power supply source 40. The production plan creating unit 160 stores the created production plan in the database 100. Note that the processes by the supply plan creating unit 150 and the production plan creating unit 160 may be performed by one arithmetic block. Further, the hydrogen supply plan and production plan may be created as one plan.

### (Operation of First Embodiment)

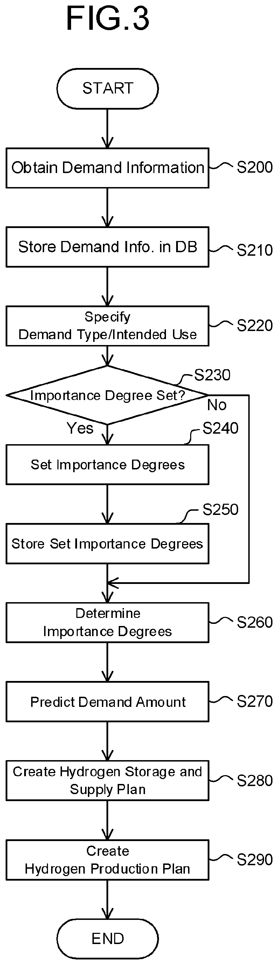

Next, the operation of the planning device 10 of the first embodiment will be described with reference to FIG. 1 to FIG. 4.

### (Obtaining and Storage of Demand Information)

The demand information receiving unit 106 obtains the demand information from the hydrogen consumer 50 (S200). The demand information includes information regarding specific hydrogen consumers such as the FCVs 52 and the fuel cell 54 as the hydrogen consumer 50. Specifically, this information is data serving as an index in the calculation of the amount of hydrogen to be produced by the hydrogen producing device 20 and the amount of hydrogen to be supplied by the hydrogen storing and supplying device 30.

The demand information receiving unit 106 stores the obtained demand information in the database 100 (S210). The demand information receiving unit 106 stores the demand type, the intended use, and a specific demand amount in the database 100 in a corresponding manner.

### (Specification of Demand Type and Intended Use)

The specifying unit 110 reads out the demand information stored in the database 100 at a predetermined instant and specifies the demand type and the intended use of each demand (S220). This is to determine importance degrees for each demand using two kinds or more of parameters to calculate the total demand importance. Regarding a specific hydrogen end consumer included in the demand information obtained from the hydrogen consumer 50 and stored in the database 100, the specifying unit 110 specifies and classifies its demand type and intended use. For example, if the hydrogen end consumer is a route bus, the demand type is specified as "Bus" and the intended use is specified as "Regular Route", and the specification results are added to the demand information. The demand information having undergone the specifying process is stored in the database 100. Note that "Demand Type" and "Intended Use" are examples, and other parameters may be used.

### (Setting of Importance Degrees)

The importance degree setting unit 120 determines whether or not the specifying unit 110 appended the importance degrees to the demand type and the intended use regarding the hydrogen end consumer included in the demand information when the specifying unit 110 specified the demand type and the intended use thereof (S230). In the case where the demand type or the intended use is absent in the demand information accumulated in the database 100 (Yes in S230), the demand type or the intended use does not have the importance degree appended thereto. In the case where the setting of the importance degrees is absent, the importance degree setting unit 120 sets the importance degrees (S240).

For the setting of the importance degrees by the importance degree setting unit 120, a manual method, an automatic method, a manual and automatic method, or a learning method is used. Hereinafter, a method of setting the importance degrees by the importance degree setting unit 120 will be described with reference to FIG. 4.

In the example illustrated in FIG. 4, the importance degrees of the demand type and the intended use are set using five-level numeric values. A larger numeric value of the importance degree indicates a higher importance degree, and a smaller numeric value indicates a lower importance degree.

As for the importance degrees of the demand type and the intended use, high numeric values are set, for example, in the case where the frequency of fuel use is high, in the case where the fuel use change rate is large, and in the case where public nature is high. Further, the importance degrees of the demand type and the intended use may be decided based on a hydrogen purchase cost, a hydrogen demand amount, purchase stability, and so on. For example, if the hydrogen purchase cost is used as a criterion, in the case where the hydrogen purchase costs of the hydrogen consumers 50 are different, the importance degrees of the demand type and the intended use of a hydrogen consumer whose purchase price is the highest may be set high. Further, if the hydrogen demand amount is used as a criterion, the importance degrees of the demand type and the intended use of a hydrogen consumer 50 purchasing a relatively large amount of hydrogen may be set high. If the purchase stability is used as a criterion, the importance degrees of a hydrogen consumer 50 stably purchasing hydrogen can be set high. That is, the importance degree index used by the planning device 10 of this embodiment can be set based on a hydrogen supply amount and the earnings obtained by the supply, the balance between the electric power cost for hydrogen production and the earnings by the hydrogen supply, the hydrogen purchase cost, the hydrogen demand amount, the hydrogen purchase stability, and so on.

For example, in the example illustrated in FIG. 4, even for the same intended uses "Passenger Car", a higher intended use importance degree is set for "Private: High Frequency of Use" with a higher frequency of use, and as a result, a higher total importance degree is set for this. Further, out of the demand types "Passenger Car" and "Bus", a higher demand type importance is set for "Bus" whose public nature is higher.

Further, in the case where the demand type is, for example, forklift, if the intended use is "unloading and carriage", the travel distance is relatively small, and the fuel use change rate is small. On the other hand, if the intended use is "transportation", the fuel use change rate is higher because it is also used for transportation between warehouses. In such a case, even for the demands whose demand types are "forklift", the intended use importance degree of the intended use "transportation" is set higher, whereby its total importance degree can be set higher.

Further, as the method of setting the importance degrees, a service rate according to the demand type and the intended use may be set. "Service rate" is an index indicating the level of capacity to satisfy the requirement of the hydrogen consumer 50. For example, in the case where the service rate of a certain demand type or a certain intended use is 80%, the importance degrees are adjusted in consideration of the service rate so that only 80% is supplied even if a request by a hydrogen end consumer is to fill up a hydrogen tank. Similarly, a time zone when to supply hydrogen may be changed according to the service rate.

When finishing the setting of the necessary importance degrees, the importance degree setting unit 120 sets the importance degrees in the importance degree determination table and stores it in the database 100 (S250).

### (Importance Degree Determination)

The importance degree determining unit 130 determines the importance degrees of each hydrogen end consumer included in the demand information obtained from the hydrogen consumer 50 and stored in the database 100, based on the importance degree determination table stored in the database 100 (S260). Consequently, the individual hydrogen end consumers in the hydrogen consumer 50 are linked with the importance degrees. The importance degree determining unit 130 stores, in the database 100, the demand information to which the importance degrees are appended.

### (Demand Amount Prediction)

The demand amount predicting unit 140 predicts a hydrogen demand amount based on the demand type and the intended use which are additionally entered in the demand information, the information on the frequency of fuel use (fuel usage information), and so on (S270). The demand predicting unit 140 stores the created hydrogen demand amount and demand prediction result in the database 100.

### (Hydrogen Storage and Supply Plan)

The supply plan creating unit 150 creates the hydrogen storage and supply plan based on the hydrogen remaining amount in the hydrogen storing and supplying device 30, and the pieces of information accumulated in the database 100, such as the demand information, the importance degrees corresponding to each hydrogen end consumer, the demand prediction result, the electric power price in the electrical grid 44 and the electric power market 42 (S280). In the creation of the hydrogen supply plan, the index of the total importance degree set for each hydrogen end consumer is used.

For example, a conceivable measure for the shortage of hydrogen suppliable to the hydrogen consumer 50 due to an insufficient hydrogen remaining amount in the hydrogen storing and supplying device 30 is to make a plan such that, for the demand type and intended use with a low total importance degree, the hydrogen supply is reduced and stop the supply until the supply capacity of the hydrogen storing and supplying device 30 becomes sufficient. Another conceivable measure is that, for the demand type and intended use with a low total importance degree, the supply time is intentionally changed and the supply is performed in a time zone when the supply capacity of the hydrogen storing and supplying device 30 is sufficient.

It is possible to create the hydrogen storage and supply plan by performing optimization by setting, as independent variables, the times when to supply hydrogen from the hydrogen storing and supplying device 30 to a plurality of hydrogen end consumers, the amounts of hydrogen to be supplied to them, or the like, setting the hydrogen remaining amount or the like in the hydrogen storing and supplying device 30 as a dependent variable, setting, as an evaluation function, the cost, the CO₂ emissions, or the like divided by the importance degrees of the hydrogen end consumers, and formulating a mixed-integer linear programming problem on a constraint expression satisfying the hydrogen demands. Here, "cost" means expenses involved in the hydrogen supply and may include the replacement cost of members involved in the hydrogen storage and supply.

Other methods may be used for the creation of the hydrogen storage and supply plan. Examples thereof include a metaheuristic method such as genetic algorithm, a method using machine learning such as reinforcement learning, and an optimization method of setting a cost, CO₂ emissions, or the like as an evaluation function, and formulating a mixed-integer linear programming problem on a constraint expression satisfying the hydrogen demands. Here, in the case where a solution is not found in the optimization method of setting the cost, the CO₂ emissions, or the like as the evaluation function and formulating the mixed-integer linear programming problem on the constraint expression satisfying the hydrogen demands, the optimization may be performed by formulating a mixed-integer linear programming problem on a constraint expression that is changed so as to satisfy hydrogen demands adjusted based on the importance degrees.

Another method is to perform the optimization by putting an evaluation function as the weighted sum of the cost or the CO₂ emissions and the hydrogen demand shortage penalty, formulating a mixed-integer linear programming problem on a constraint expression satisfying the hydrogen demands, and in the case where a threshold value for the allowance of penalty is exceeded, perform the optimization by formulating a mixed-integer linear programming problem on a constraint expression that is changed so as to satisfy hydrogen demands adjusted according to the importance degrees. Here, communication with another system may be repeated any number of times to adjust the hydrogen demands according to the importance degrees. At this time, the other system may change the demand by fallback, shift, or the like.

As described above, various kinds of information collected by the electric power information receiving unit 102, the hydrogen information transmitting and receiving unit 104, the demand information receiving unit 106, and so on, such as the hydrogen remaining amount in the hydrogen storing and supplying device 30, the electric power and hydrogen demand information, and the importance degrees corresponding to the hydrogen end consumers, the demand prediction result, and the electric power price in the electrical grid 44 and the electric power market 42, contribute to the setting of the constraint expression when the supply plan creating unit 150 creates the hydrogen storage and supply plan.

The created hydrogen storage and supply plan is stored in the database 100 and is also sent to the hydrogen storing and supplying device 30 through the hydrogen information transmitting and receiving unit 104. The hydrogen storing and supplying device 30 supplies the stored hydrogen to the hydrogen consumer 50 based on the hydrogen storage and supply plan.

### (Hydrogen Production Plan)

The production plan creating unit 160 creates the hydrogen production plan based on the hydrogen storage and supply plan, the operation information of the hydrogen producing device 20, and the information such as the electric power price in the electrical grid 44 which information is obtained from the electric power supply source 40 (S290).

It is possible to create the hydrogen production plan by, for each plan, performing the optimization by putting an input electric power to the hydrogen producing device 20 as an independent variable, putting a hydrogen amount output from the hydrogen producing device 20, or the like as a dependent variable, and formulating a mixed-integer linear programming problem whose evaluation function is cost, on a constraint expression satisfying the hydrogen storage amount found in the hydrogen storage and supply plan. Here, "cost" means expenses required for the hydrogen production and may include the electric power cost due to the electric power supplied to the hydrogen producing device 20, the replacement costs of members involved in the hydrogen production, and so on.

Further, the hydrogen production plan may be created using a metaheuristic method such as genetic algorithm or a method using machine learning such as reinforcement learning.

As described above, the planning device 10 of the first embodiment sets the importance degrees according to the demand type and the intended use of the hydrogen end consumers and creates the hydrogen storage and supply plan and the hydrogen production plan with the importance degrees taken into consideration, thereby achieving efficient hydrogen production, hydrogen storage, and hydrogen supply while meeting demands of the hydrogen consumers to the fullest extent possible.

In the first embodiment, the hydrogen supply plan creating unit 150 creates the hydrogen supply plan for hydrogen that is to be supplied from the hydrogen storing and supplying device 30, and the hydrogen production plan creating unit 160 creates the operation plan and the hydrogen production plan that the hydrogen producing device 20 should execute, but this is not restrictive. Another configuration example is to provide a supply and production plan creating unit that has the functions of both the hydrogen supply plan creating unit 150 and the hydrogen production plan creating unit 160 so that one arithmetic unit creates the plurality of plans.

### (Second Embodiment)

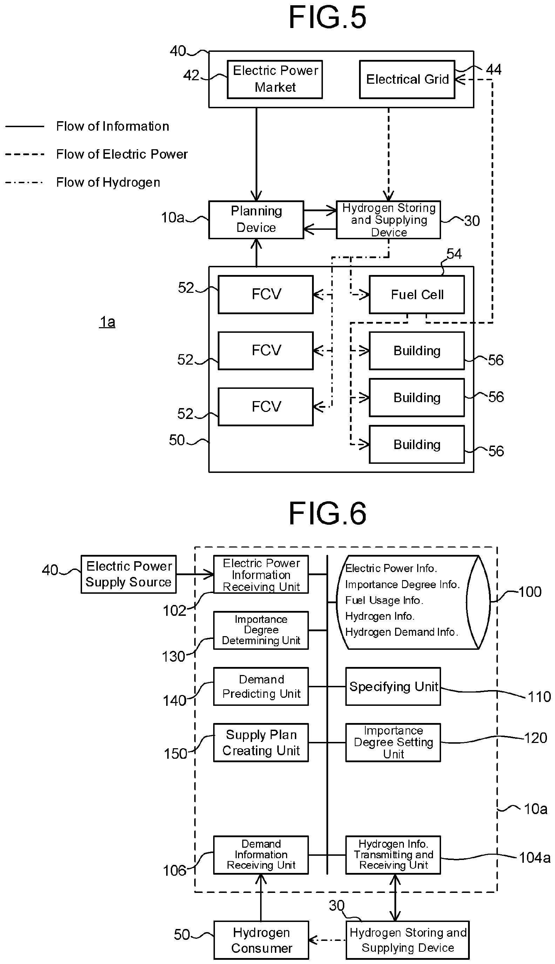

Next, a hydrogen supply system 1a and a planning device 10a of a second embodiment will be described with reference to FIG. 5 and FIG. 6. As illustrated in FIG. 5 and FIG. 6, the hydrogen supply system 1a according to the second embodiment is configured such that the hydrogen producing device 20 is removed from the hydrogen supply system 1 in the first embodiment. In the following description, common elements will be denoted by common reference signs, and a redundant description thereof will be omitted.

As illustrated in FIG. 5, the hydrogen supply system 1a of this embodiment does not have the hydrogen producing device. Further, as illustrated in FIG. 6, the planning device 10a of this embodiment includes a hydrogen information transmitting and receiving unit 104a that transmits/receives information only to/from the hydrogen storing supplying device 30, and does not have a production plan creating unit.

A supply plan creating unit 150 creates a hydrogen supply plan based on the prediction result by a demand predicting unit 140, importance degree information, electric power information obtained from an electric power supply source 40, storage information obtained from the hydrogen storing and supplying device 30, and so on.

The planning device 10a having the configuration illustrated in FIG. 6 also sets importance degrees according to a demand type and an intended use of hydrogen end consumers and creates a hydrogen storage and supply plan with the importance degrees taken into consideration, thereby achieving efficient hydrogen storage and hydrogen supply while meeting demands of the hydrogen consumers to the fullest extent possible.

### (Third Embodiment)

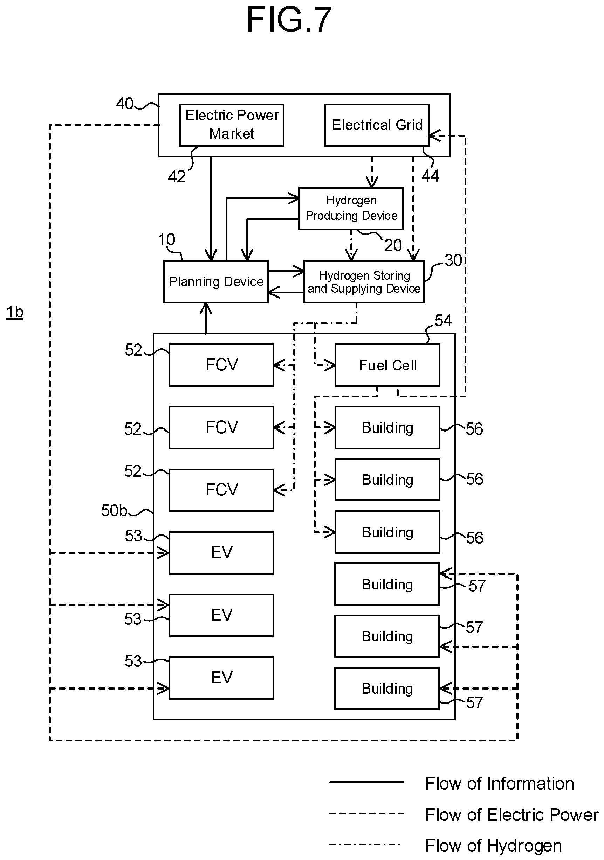

Next, a hydrogen supply system 1b and a planning device 10 of a third embodiment will be described with reference to FIG. 7. As illustrated in FIG. 7, in the hydrogen supply system 1b according to the third embodiment, as compared with the hydrogen supply system 1 according to the first embodiment, a hydrogen consumer 50b includes electric vehicles (EV) 53 that consume not hydrogen but electric power. That is, even if the hydrogen consumer 50b includes elements that do not directly consume hydrogen (elements that directly consume the electric power from the electric power supply source 40), the planning device 10 according to the first embodiment is applicable as it is.

### (Fourth Embodiment)

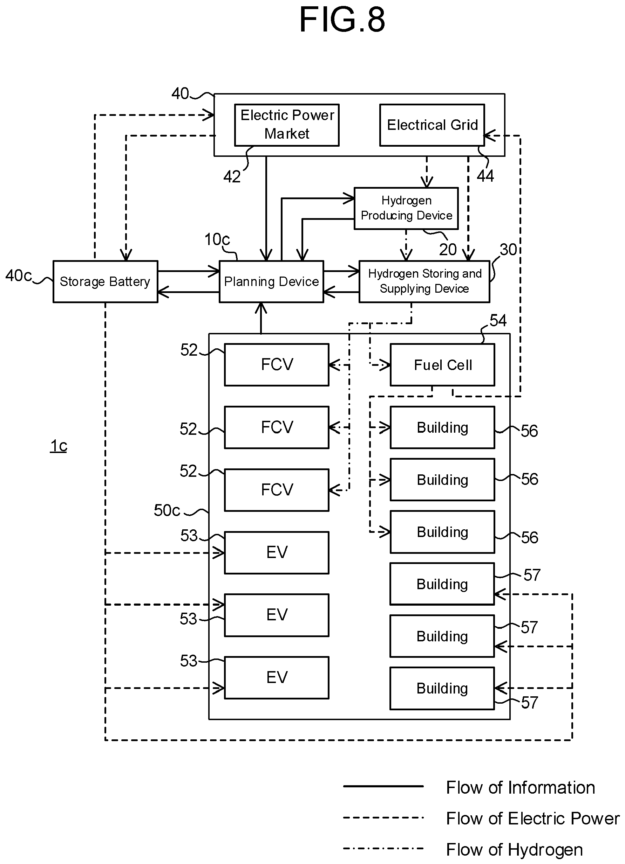

Next, a hydrogen supply system 1c and a planning device 10c of a fourth embodiment will be described with reference to FIG. 8. As illustrated in FIG. 8, the hydrogen supply system 1c according to the fourth embodiment includes a storage battery 40c in addition to the electric power supply source 40 of the hydrogen supply system 1 in the first embodiment, and a hydrogen consumer 50c includes elements that do not directly consume hydrogen (electric vehicles (EV) 53 that directly consume electric power from the storage battery 40c). That is, this hydrogen supply system 1c includes the storage battery 40c that is charged using the electric power of the electric power supply source 40 and supplies the electric power directly to the EVs 53. In the following description, common elements will be denoted by common reference signs, and a redundant description thereof will be omitted.

The hydrogen supply system 1c of the fourth embodiment includes the storage battery 40c being a power supply source that does not consume hydrogen from a hydrogen storing and supplying device 30, and the storage battery 40c supplies electric power directly to the EVs 53. At this time, the planning device 10c is capable of receiving electric power information, demand information, and so on also from the storage battery 40c through a not-illustrated electric power information receiving unit.

As an electric power source, the storage battery 40c competes with the electric power supply source 40. That is, the electric power information and the demand information in the storage battery 40c have an influence on information regarding electric power from the electric power supply source 40 to a hydrogen producing device 20 and so on and demand information. In the planning device 10c of this embodiment, a not-illustrated production plan creating unit uses the electric power information and the demand information of the storage battery 40c as one of the parameters when creating a hydrogen production plan.

According to the planning device 10c of this embodiment, the electric power information and the demand information of an electric power supply source to elements that are not directly involved in hydrogen demand/supply from/to the hydrogen consumer 50c are taken into consideration, making it possible to create a more accurate hydrogen production plan.

### (Fifth Embodiment)

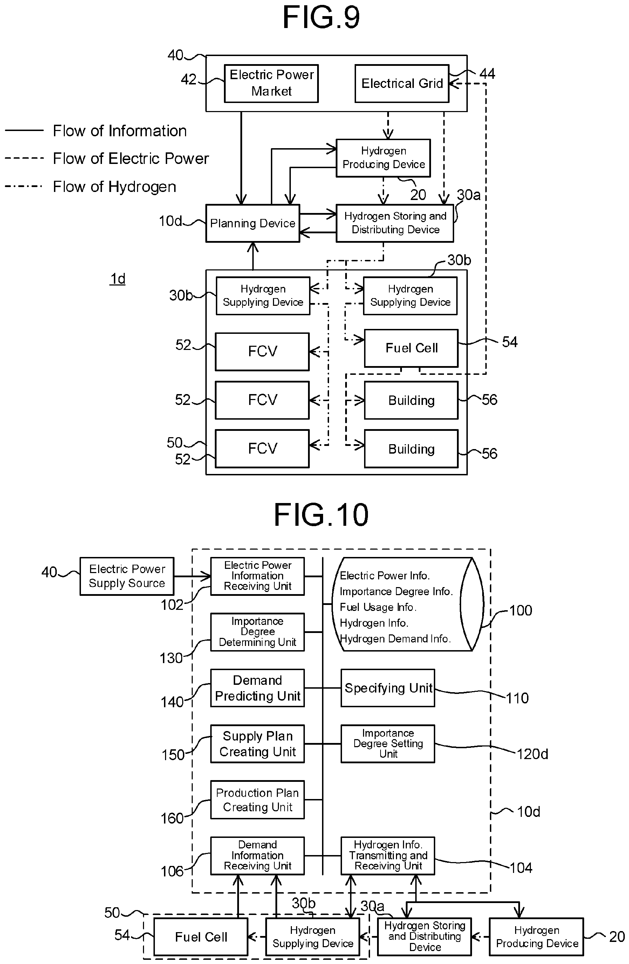

Next, a hydrogen supply system 1d and a planning device 10d of a fifth embodiment will be described with reference to FIG. 9 and FIG. 10. As illustrated in FIG. 9, the hydrogen supply system 1d according to the fifth embodiment includes a hydrogen storing and distributing device 30a in place of the hydrogen storing and supplying device 30 of the hydrogen supply system 1 in the first embodiment, and its hydrogen supplying devices 30b are provided in a hydrogen consumer 50. That is, hydrogen supply elements in the hydrogen supply system are placed in the hydrogen consumer 50. In the following description, common elements will be denoted by common reference signs, and a redundant description thereof will be omitted.

The hydrogen storing and distributing device 30a and the hydrogen supplying devices 30b in this embodiment are assigned functions into which the function of the hydrogen storing and supplying device 30 of the first embodiment is divided. In the example illustrated in FIG. 9, the hydrogen storing and distributing device 30a stores hydrogen produced by a hydrogen producing device 20 and distributes an appropriate amount of the hydrogen to each of the plurality of hydrogen supplying devices 30b placed in the hydrogen consumer 50. The hydrogen supplying devices 30b to which the hydrogen is distributed supply predetermined supply amounts of the hydrogen to FCVs 52 and a fuel cell 54 that they are in charge of respectively. That is, the hydrogen storing and distributing device 30a is capable of adjusting hydrogen distribution amounts based on importance degrees of the hydrogen supplying devices instead of the importance degrees of hydrogen end consumers.

Specifically, since the hydrogen supplying devices 30b that supply hydrogen to the hydrogen end consumers are placed in the hydrogen consumer 50 as illustrated in FIG. 10, a demand information receiving unit 106 receives hydrogen information, hydrogen demand information, and so on provided by the hydrogen supply destinations and the hydrogen supplying devices 30b in the hydrogen consumer 50. For example, in the case where the hydrogen supplying device 30b that supplies hydrogen to the FCVs 52 and the hydrogen supplying device 30b that supplies hydrogen to the fuel cell 54 are present as illustrated in FIG. 9, the distribution amounts of hydrogen to the hydrogen supplying devices 30b that supply hydrogen to the FCVs 52 and the fuel cell 54 respectively are adjusted according to the importance degrees of the FCV 52 and the importance degrees of the fuel cell 54, which makes it possible to adjust the amounts of hydrogen to be supplied to the supply destinations.

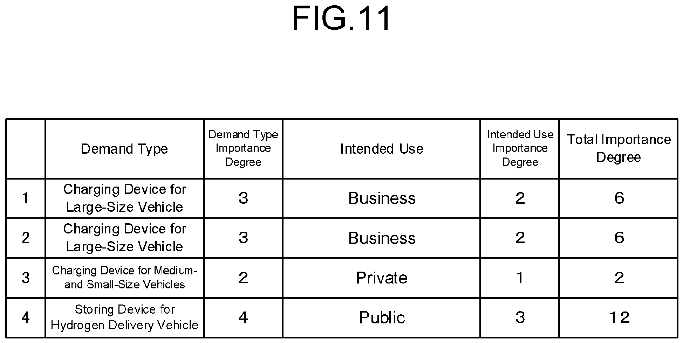

An importance degree setting unit 120d of this embodiment sets the importance degrees in the same manner as in the first embodiment, but this embodiment is different from the first embodiment in that a demand type and an intended use are set for the hydrogen supplying devices 30b in the hydrogen consumer 50. Hereinafter, a method of setting the importance degrees by the importance degree setting unit 120d will be described with reference to FIG. 11.

As the importance degrees of the demand type and the intended use in this embodiment, a higher numeric value is set, for example, in the case where the fuel supply frequency is high, in the case where a fuel supply change rate is large, in the case where public nature is high, and in other such cases. The importance degrees of the demand type and the intended use may be decided based on a hydrogen purchase cost or a hydrogen demand amount. For example, if the hydrogen purchase cost is used as a criterion, in the case where the hydrogen supply cost varies in the hydrogen consumer 50, the importance degrees of the demand type and the intended use of a hydrogen consumer that is supplied with hydrogen at the highest price may be set high. Further, if the hydrogen demand amount is used as a criterion, the importance degrees of the demand type and the intended use of a hydrogen consumer 50 that purchases a relatively large amount of hydrogen may be set high.

For example, in the example illustrated in FIG. 11, as the demand type, "Charging Device for Large-Size Vehicle", "Charging Device for Medium- and Small-Size Vehicles", and "Storing Device for Hydrogen Delivery Vehicle" which are the hydrogen supplying devices 30b are set. As the intended use, "Business", "Private", and "Public" are set. Out of the demand types "Charging Device for Large-Size Vehicle" and "Medium- and Small-Size Vehicles", a higher demand type importance degree is set for "Charging Device for Large-Size Vehicle" whose public nature is high. This also applies to the intended use. Regarding the intended uses "Public", "Business", and "Private", as the public nature is higher, the intended use importance degree is set higher.

The planning device 10d of this embodiment creates a hydrogen distribution plan instead of the hydrogen supply plan. That is, the amounts of hydrogen to be distributed to the plurality of hydrogen supplying devices 30b placed in the hydrogen consumer 50 are planned. In the case where there are various types of hydrogen end consumers in the hydrogen consumer 50, it would be necessary to create hydrogen supply plans for all these type, but the hydrogen distribution plan only needs to stipulate the amounts of hydrogen to be distributed to the hydrogen supplying devices 30b that are provided for roughly grouped hydrogen end consumers, making it possible to simplify the configuration.

### (Sixth Embodiment)

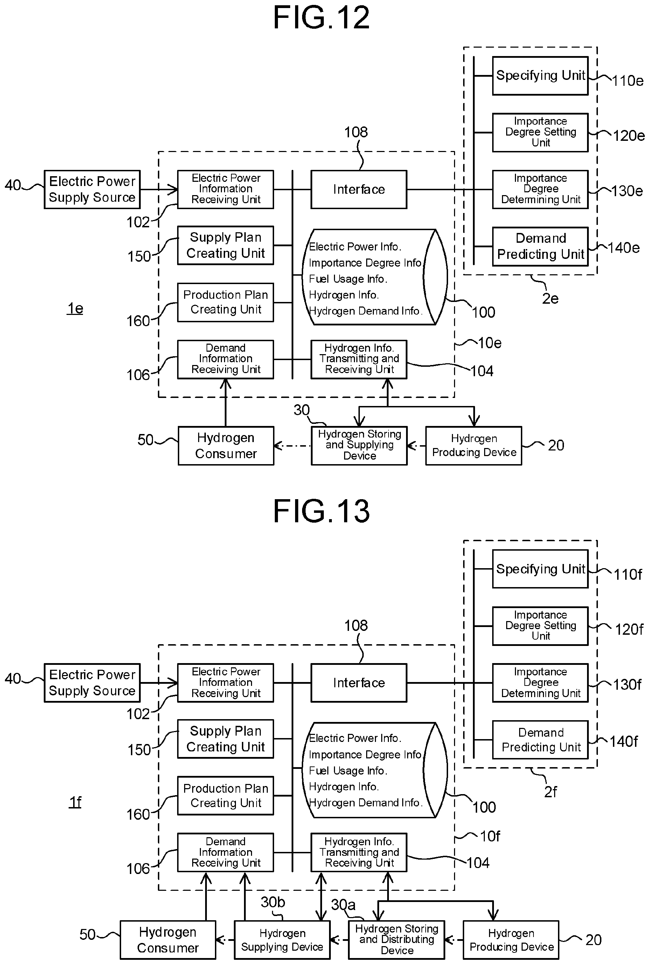

Next, a hydrogen supply system 1e and a planning device 10e of a sixth embodiment will be described with reference to FIG. 12. As illustrated in FIG. 12, the planning device 10e of the hydrogen supply system 1e according to the sixth embodiment is configured such that the specifying unit 110, the importance degree setting unit 120, the importance degree determining unit 130, and the demand predicting unit 140 in the hydrogen supply system 1 in the first embodiment are separated as a charging demand managing system 2e from the planning device 10. In the following description, common elements will be denoted by common reference signs, and a redundant description thereof will be omitted.

The charging demand managing system 2e includes a specifying unit 110e, an importance degree setting unit 120e, an importance degree determining unit 130e, and a demand predicting unit 140e. The specifying unit 110e, the importance degree setting unit 120e, the importance degree determining unit 130e, and the demand predicting unit 140e of this embodiment have the same functions as those of the specifying unit 110, the importance degree setting unit 120, the importance degree determining unit 130, and the demand predicting unit 140 of the first embodiment respectively. The charging demand managing system 2e receives electric power information, electric power demand information, importance degree information, fuel usage information, hydrogen information, hydrogen demand information, and so on from the planning device 10e and calculates a hydrogen demand amount and demand prediction to return them to the planning device 10e.

The planning device 10e includes an interface 108. The interface 108 is an interface that connects the charging demand managing system 2e and the planning device 10e. The planning device 10e transmits the electric power information, the electric power demand information, the importance degree information, the fuel usage information, the hydrogen information, the hydrogen demand information, and so on through the interface 108 and receives the hydrogen demand amount and the demand prediction.

According to the hydrogen supply system 1e of this embodiment, it is possible to simplify the configuration of the planning device.

### (Seventh Embodiment)

Next, a hydrogen supply system 1f and a planning device 10f of a seventh embodiment will be described with reference to FIG. 13. As illustrated in FIG. 13, the hydrogen supply system 1f according to the seventh embodiment is configured such that the specifying unit 110, the importance degree setting unit 120d, the importance degree determining unit 130, and the demand predicting unit 140 in the planning device 10d of the hydrogen supply system 1d of the fifth embodiment are separated as a charging demand managing system 2f from the planning device 10d.

The charging demand managing system 2f includes a specifying unit 110f, an importance degree setting unit 120f, an importance degree determining unit 130f, and a demand predicting unit 140f. The specifying unit 1 10f, the importance degree setting unit 120f, the importance degree determining unit 130f, and the demand predicting unit 140f of this embodiment have the same functions as those of the specifying unit 110, the importance degree setting unit 120, the importance degree determining unit 130, and the demand predicting unit 140 of the first embodiment respectively. The charging demand managing system 2f receives electric power information, electric power demand information, importance degree information, fuel usage information, hydrogen information, hydrogen demand information, and so on from the planning device 10f, and calculates a hydrogen demand amount and demand prediction to return them to the planning device 10f.

The planning device 10f includes an interface108. The interface 108 is an interface that connects the charging demand managing system 2f and the planning device 10f. The planning device 10f transmits the electric power information, the electric power demand information, the importance degree information, the fuel usage information, the hydrogen information, the hydrogen demand information, and so on through the interface 108, and receives the hydrogen demand amount and the demand prediction.

According to the hydrogen supply system 1f of this embodiment, it is possible to simplify the configuration of the planning device.

### (Eighth Embodiment)

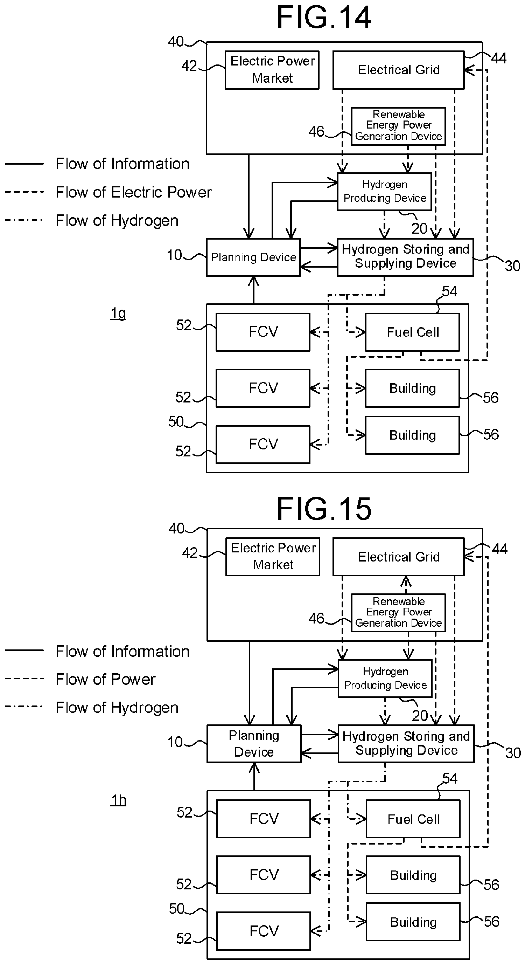

Next, a hydrogen supply system 1g of an eighth embodiment will be described with reference to FIG. 14. The embodiment illustrated in FIG. 14 includes a renewable energy power generation device 46 as a renewable energy element. Specifically, this is a renewable energy power station (on-site renewable energy) such as a solar power station or a wind power station that supplies electric power directly to a hydrogen producing device 20 and a hydrogen storing and supplying device 30 not through an electric power market or an electrical grid. At this time, a planning device 10 may be capable of obtaining, as electric power information, information such as a cost required for electric power supplied from the renewable energy power generation device, through a system that manages renewable energy.

According to the hydrogen supply system 1g of this embodiment, it is possible to create a hydrogen production plan even if the hydrogen producing device 20 and the hydrogen storing and supplying device 30 are supplied with electric power from a renewable energy generation-based electric power source different from an electrical grid 44.

### (Ninth Embodiment)

Next, a hydrogen supply system 1h of a ninth embodiment will be described with reference to FIG. 15. The embodiment illustrated in FIG. 15 is configured such that the renewable energy power generation device 46 in the hydrogen supply system 1g of the eighth embodiment is capable of supplying electric power also to the electrical grid 44 in addition to the hydrogen producing device 20 and the hydrogen storing and supplying device 30. That is, the electric power generated by renewable energy power generation may be supplied (sold) to the electric power supply source 40.

In the hydrogen supply system 1h of this embodiment, it is possible to create a hydrogen production plan even if the hydrogen producing device 20, the hydrogen storing and supplying device 30, and the electrical grid 44 are supplied with electric power from a renewable energy power generation-based electric power source.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A planning device connected to an electric power supply source for supplying electric power and a hydrogen storing and supplying device for storing hydrogen and supplying the hydrogen to a hydrogen consumer, configured to create a hydrogen supply plan in the hydrogen storing and supplying device, the planning device including:
a state information receiving unit that receives state information including a state of the hydrogen storing and supplying device and a storage state of the hydrogen in the hydrogen storing and supplying device;
a demand information receiving unit that obtains hydrogen demand information including a type and an intended use of a hydrogen demand from the hydrogen consumer;
a specifying unit that specifies, regarding the hydrogen demand information, a demand type categorizing the hydrogen demand and the intended use of the hydrogen demand;
an importance degree setting unit that sets an importance degree table configured to link an importance degree of the demand type and an importance degree of the intended use with results of the specification by the specifying unit;
an importance degree determining unit that determines the importance degree of the demand type and the importance degree of the intended use corresponding to the hydrogen demand information, based on the hydrogen demand information, the results of the specification by the specifying unit, and the importance degree table;
a demand predicting unit that predicts the hydrogen demand based on the hydrogen demand information and the results of the specification by the specifying unit;
an electric power information receiving unit that obtains, from the electric power supply source, electric power information including cost information of the electric power; and
a supply plan creating unit that creates the hydrogen supply plan based on the state information, the hydrogen demand information, a result of the prediction, the importance degrees, and the electric power information.

2. The planning device according to claim 1,
the planning device being further connected to a hydrogen producing device that produces the hydrogen using the electric power,
wherein the state information further includes a state of the hydrogen producing device and an operation state of the hydrogen producing device,
the planning device further including a production plan creating unit that creates a hydrogen production plan based on the hydrogen supply plan, the electric power information, and the state information, to create the hydrogen production plan in the hydrogen producing device.

3. The planning device according to claim 1,
wherein the hydrogen consumer further includes an electric vehicle that consumes electric power,
wherein the demand information receiving unit further receives demand information of the electric power consumed by the electric vehicle, and
wherein the supply plan creating unit creates the hydrogen supply plan in the hydrogen storing and supplying device based on the state information, the hydrogen demand information, the result of the prediction, the importance degrees, the electric power information, and the demand information of the electric power.

4. The planning device according to claim 2,
wherein the hydrogen consumer further includes an electric vehicle that consumes electric power,
wherein the demand information receiving unit further receives demand information of the electric power consumed by the electric vehicle, and
wherein the production plan creating unit creates the hydrogen production plan in the hydrogen producing device based on the hydrogen supply plan, the electric power information, the state information, and the demand information of the electric power.

5. The planning device according to claim 1,
wherein the electric power supply source includes a renewable energy power generation device that supplies renewable energy-based electric power directly to the hydrogen storing and supplying device,
wherein the electric power information includes cost information of the electric power supplied directly to the hydrogen storing and supplying device by the renewable energy power generation device, and
wherein the supply plan creating unit creates the hydrogen supply plan in the hydrogen storing and supplying device based on the state information, the hydrogen demand information, the result of the prediction, the importance degrees, and the electric power information.

6. The planning device according to claim 2,
wherein the electric power supply source includes a renewable energy power generation device that supplies renewable energy-based electric power directly to the hydrogen producing device,
wherein the electric power information includes cost information of the electric power supplied directly to the hydrogen producing device by the renewable energy power generation device, and
wherein the production plan creating unit creates the hydrogen production plan in the hydrogen producing device based on the hydrogen supply plan, the state information, and the electric power information.

7. The planning device according to claim 1,
wherein the electric power supply source includes:
a renewable energy power generation device that supplies renewable energy-based electric power directly to the hydrogen storing and supplying device or supplies the renewable energy-based electric power to the electric power supply source; or
a renewable energy power generation device that supplies the renewable energy-based electric power directly to the hydrogen storing and supplying device and supplies the renewable energy-based electric power to the electric power supply source,
wherein the electric power information includes information on a cost of the electric power supplied directly to the hydrogen storing and supplying device by the renewable energy power generation device and a cost of the electric power supplied to the electric power supply source by the renewable energy power generation device, and
wherein the supply plan creating unit creates the hydrogen supply plan in the hydrogen storing and supplying device based on the state information, the hydrogen demand information, the result of the prediction, the importance degrees, and the electric power information.

8. The planning device according to claim 2,
wherein the electric power supply source includes:
a renewable energy power generation device that supplies renewable energy-based electric power directly to the hydrogen producing device or supplies the renewable energy-based electric power to the electric power supply source; or
a renewable energy power generation device that supplies the renewable energy-based electric power directly to the hydrogen producing device and supplies the renewable energy-based electric power to the electric power supply source,
wherein the electric power information includes information on a cost of the electric power supplied directly to the hydrogen producing device by the renewable energy power generation device and a cost of the electric power supplied to the electric power supply source by the renewable energy power generation device, and
wherein the production plan creating unit creates the hydrogen production plan in the hydrogen producing device based on the hydrogen supply plan, the state information, and the electric power information.

9. The planning device according to claim 1, wherein the supply plan creating unit creates the hydrogen supply plan using a total importance degree obtained based on the importance degree of the demand type and the importance degree of the intended use.

10. The planning device according to claim 1, wherein the importance degrees are set based on at least one of a frequency of use of the hydrogen, a use change rate of the hydrogen, and a public nature of hydrogen use, in each of the demand type and the intended use.

11. The planning device according to claim 1, wherein the importance degrees are set based on a service rate indicating whether or not it is possible to satisfactorily meet a request from the hydrogen consumer.

12. The planning device according to claim 1, wherein the setting by the importance degree setting unit is enabled by at least one of manual setting by a user and automatic setting based on a predetermined rule.

13. A planning device connected to an electric power supply source for supplying electric power and a hydrogen storing and supplying device for storing hydrogen and supplying the hydrogen to a hydrogen consumer, configured to create a hydrogen supply plan in the hydrogen storing and supplying device, the planning device including:
a demand information receiving unit that obtains hydrogen demand information including a type and an intended use of a hydrogen demand from the hydrogen consumer;
a storage unit that stores the hydrogen demand information;
a specifying unit that specifies, regarding the hydrogen demand information, a demand type categorizing the hydrogen demand and the intended use of the hydrogen demand, and to cause the storage unit to store the demand type and the intended use;
an importance degree setting unit that causes the storage unit to store an importance degree table configured to link an importance degree of the demand type and an importance degree of the intended use with results of the specification by the specifying unit;
an importance degree determining unit that determines the importance degree of the demand type and the importance degree of the intended use corresponding to the demand information, based on the hydrogen demand information, the results of the specification by the specifying unit, and the importance degree table;
a demand predicting unit that predicts the hydrogen demand based on the hydrogen demand information and the results of the specification by the specifying unit;
an electric power information receiving unit that obtains, from the electric power supply source, electric power information including cost information of the electric power;
a hydrogen information receiving unit that receives storage information indicating a storage state of the hydrogen in the hydrogen storing and supplying device; and
a supply plan creating unit that creates the hydrogen supply plan based on a result of the prediction by the demand predicting unit, the importance degrees, the electric power information, and the storage information.

14. A planning device connected to an electric power supply source for supplying electric power, a hydrogen producing device for producing hydrogen using the electric power, and a hydrogen storing and supplying device for storing the hydrogen and supplying the hydrogen to a hydrogen consumer, configured to create a hydrogen production plan in the hydrogen producing device and a hydrogen supply plan in the hydrogen storing and supplying device, the planning device including:
a demand information receiving unit that obtains hydrogen demand information including a type and an intended use of a hydrogen demand from the hydrogen consumer;
a storage unit that stores the hydrogen demand information;
an interface that transmits the hydrogen demand information and receives a predicted hydrogen demand transmitted to the interface, the predicted hydrogen demand being obtained in response to the transmission of the hydrogen demand information, by:
specifying a demand type categorizing the type of the hydrogen demand and the intended use of the hydrogen demand regarding the hydrogen demand information;
creating an importance degree table configured to link an importance degree of the demand type and an importance degree of the intended use with results of the specification,
determining the importance degree of the demand type and the importance degree of the intended use corresponding to the hydrogen demand information based on the hydrogen demand information, the results of the specification, and the importance degree table, and
predicting the hydrogen demand based on the hydrogen demand information and the result of the determination;
a supply plan creating unit that creates the hydrogen supply plan based on a result of the prediction and the importance degrees;
an electric power information receiving unit that obtains, from the electric power supply source, electric power information including cost information of the electric power;
a hydrogen information receiving unit that receives operation information indicating an operation state of the hydrogen producing device and storage information indicating a storage state of the hydrogen in the hydrogen storing and supplying device; and
a production plan creating unit that creates the hydrogen production plan based on the hydrogen supply plan, the operation information, and the storage information.
